# EUROPEAN PATENT APPLICATION

(11) **EP 4 531 379 A1**
(43) Date of publication of application: **02.04.2025**
(21) Application number: 24196543.3
(22) Date of filing: 26.08.2024
(51) Int. Cl.: H04L 67/1008, H04L 67/1012, H04L 67/104, H04L 9/00, H04L 9/32, H04L 9/08, H04W 4/70, H04W 12/60

(54) **APPARATUSES, DEVICES, METHODS AND NON-TRANSITORY COMPUTER-READABLE MEDIA FOR A GROUP LEADER AND A GROUP MEMBER OF A GROUP OF NODES**

(30) Priority: 26.09.2023 US 202318474278
(71) Applicant: INTEL Corporation, Santa Clara, CA 95054 (US)
(72) Inventor: POORNACHANDRAN, Rajesh, Portland, 97229 (US); CARRANZA, Marcos, Portland, 97229 (US); CHILAKALA, Mallikarjuna, Tigard, 97223 (US); GUIM BERNAT, Francesc, 08036 Barcelona (ES); KUMAR, Karthik, CHANDLER, 85249 (US)
(74) Representative: 2SPL Patentanwälte PartG mbB

(57) **Abstract**

Various examples relate to apparatuses, devices, methods and computer programs for a group leader and a group member of a group of nodes of a blockchain network. The apparatus for the group leader comprises interface circuitry, machine-readable instructions, and processor circuitry to execute the machine-readable instructions to manage a membership of nodes of the blockchain network in the group of nodes, perform or delegate blockchain-related computational activity on behalf of the group of nodes according to an energy criterion.

## Description

### Background

A zero-knowledge proof (ZKP) is a cryptographic mechanism that allows anyone to prove the truth of a statement without having to share the information in a statement and without revealing how the information was received. Blockchain validators run computations that verify if a proof is correct and, if so, apply state changes without learning the data that was verified. ZKP is a key technology for blockchain based Web 3.0, with the inherent attractive properties of privacy preservation and avoiding redundant computations for verificat3ion, making web3.0 transactions less expensive.

### Brief description of the Figures

Some examples of apparatuses and/or methods will be described in the following by way of example only, and with reference to the accompanying figures, in which:
- Fig. 1a: shows a schematic diagram of an example of an apparatus or device for a group leader of a group of nodes, and of a computer system comprising such an apparatus or device;
- Fig. 1b: shows a flow chart of an example of a method for a group leader of a group of nodes;
- Fig. 2a: shows a schematic diagram of an example of an apparatus or device of a group member of a group of nodes;
- Figs. 2b to 2d: show flow charts of examples of aspects of a method for a group member of a group of nodes;
- Fig. 3: shows a schematic diagram of a high-level use case supported by the proposed system architecture;
- Fig. 4: shows a schematic diagram of energy-aware leader-based proof-of-creation publication;
- Fig. 5: shows a schematic diagram of Layer 2 enhancements for off-chain Proof-of-Creation publishing as batched transactions across one or many EPID groups and heterogeneous blockchains; and
- Fig. 6: shows a schematic diagram of a failover mechanism for group leadership using carbon-aware principles.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

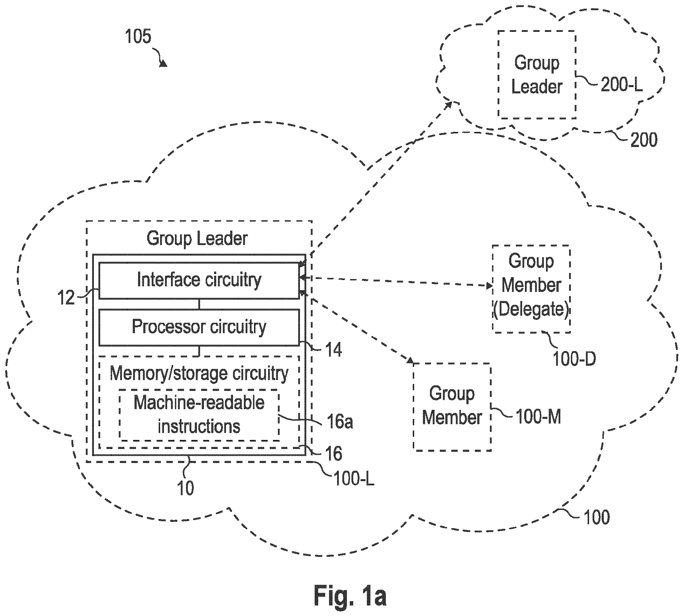

Fig. 1a shows a schematic diagram of an example of an apparatus 10 or device 10 for a group leader 100-L (L stands for Leader) of a group of nodes 100 of a blockchain network 105, and of a computer system 100-L (the computer system 100-L implementing the group leader) comprising such an apparatus 10 or device 10. Fig. 1a further shows a system, e.g., the group of nodes 100, comprising the group leader 100-L and one or more group members 100-M (M stands for member), 100-D (D stands for Delegate). The blockchain network 105 is a network of nodes that participate or use the same blockchain, e.g., a public blockchain such as Ethereum (a trademark of Stiftung Ethereum/Ethereum Foundation) or Solana (a trademark of Solana Foundation), or a private blockchain.

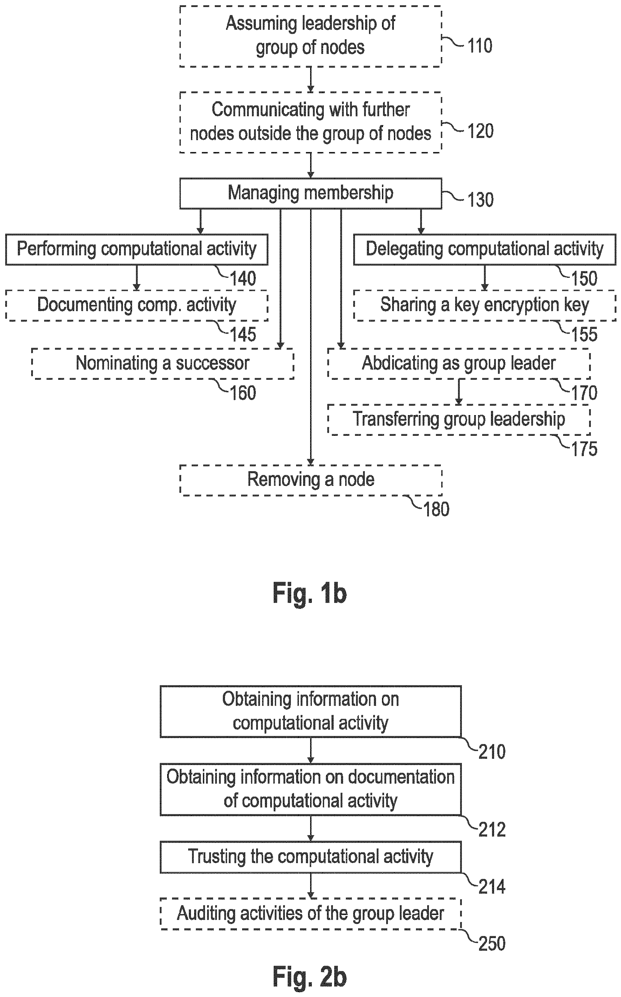

The apparatus 10 comprises circuitry to provide the functionality of the apparatus 10. For example, the circuitry of the apparatus 10 may be configured to provide the functionality of the apparatus 10. For example, the apparatus 10 of Fig. 1a comprises interface circuitry 12, processor circuitry 14, and (optional) memory/storage circuitry 16. For example, the processor circuitry 14 may be coupled with the interface circuitry 12 and/or with the memory/storage circuitry 16. For example, the processor circuitry 14 may provide the functionality of the apparatus, in conjunction with the interface circuitry 12 (for communicating with other group members 100-M, 100-D of the group of nodes 100, and/or for communicating with nodes 200-L of another group of nodes 200), and the memory/storage circuitry 16 (for storing information, such as machine-readable instructions). Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1b comprises means for processing 14, which may correspond to or be implemented by the processor circuitry 14, means for communicating 12, which may correspond to or be implemented by the interface circuitry 12, (optional) means for storing information 16, which may correspond to or be implemented by the memory or storage circuitry 16. In general, the functionality of the processor circuitry 14 or means for processing 14 may be implemented by the processor circuitry 14 or means for processing 14 executing machine-readable instructions. Accordingly, any feature ascribed to the processor circuitry 14 or means for processing 14 may be defined by one or more instructions of a plurality of machine-readable instructions. The apparatus 10 or device 10 may comprise the machine-readable instructions 16a, e.g., within the memory or storage circuitry 16 or means for storing information 16.

The processor circuitry 14 or means for processing 14 is to manage a membership of nodes of the blockchain network in the group of nodes. The processor circuitry 14 or means for processing 14 is to perform or delegate blockchain-related computational activity on behalf of the group of nodes according to an energy criterion.

Fig. 1b shows a flow chart of an example of a corresponding method for the group leader 100-L of the group of nodes. The method comprises managing 130 a membership of nodes of the blockchain network in the group of nodes. The method comprises performing 140 or delegating 150 blockchain-related computational activity on behalf of the group of nodes according to an energy criterion. For example, the method may be performed by the group leader 100-L of the group nodes, e.g., by a computer system 100-L, apparatus 10 or device 10 implementing the group leader 100-L.

In the following, further details with respect to the apparatus 10, the device 10, the group leader 100-L, the group of nodes 100, the method, and a corresponding computer program will be introduced with reference to the apparatus 10, the group-leader 100-L and the group of nodes. Features introduced with reference to the apparatus 10, group leader 100-L and group of nodes 100 may likewise be included in the corresponding device 10, method and computer program.

Various examples of the present disclosure are based on the finding, that blockchain operations can be computationally expensive, putting a burden on computationally lower-power devices, such as IoT (Internet-of-Things) devices. To enable the use of blockchain technology for IoT devices, in the proposed concept, multiple devices are grouped into groups of nodes, such as the group of nodes 100. Within the group, the computational activity related to activities on the blockchain can be delegated among the members, with a group leader (i.e., the group leader 100-L discussed in connection with Figs. 1a and 1b) both controlling distribution of the computational activity and communicating with other nodes outside the group of nodes. In effect, both the average and overall computational load on the group members is reduced (as the blockchain-related computational is only performed once within the group), which enables use of blockchain technology even by interconnected low-power devices. Moreover, in order to reduce energy use and/or avoid carbon emissions, the distribution of the computational activity and, optionally, leadership of the group are determined according to an energy criterion.

As outlined above, one of the tasks of the group leader is to distribute the work (or perform the work itself), while another task is communication with nodes 200-L outside the group of nodes 105, e.g., a group leader 200-L of another group of nodes or other nodes outside the group of nodes, such as an external validator. Accordingly, to reduce energy use and/or avoid carbon emissions, the processor circuitry may assume, by the node, leadership of the group of nodes according to the energy criterion. Accordingly, as further shown in Fig. 1b, the method may comprise assuming 110, by the node, leadership of the group of nodes according to the energy criterion.

The group leader of the group of nodes has different duties. One of the duties lie in the communication of the group of nodes. For example, the processor circuitry may communicate, as group leader, with one or more further nodes outside the group of nodes on behalf of the group of nodes. According to an example, the method may comprise communicating 120, by the group leader, with one or more further nodes outside the group of nodes on behalf of the group of nodes.

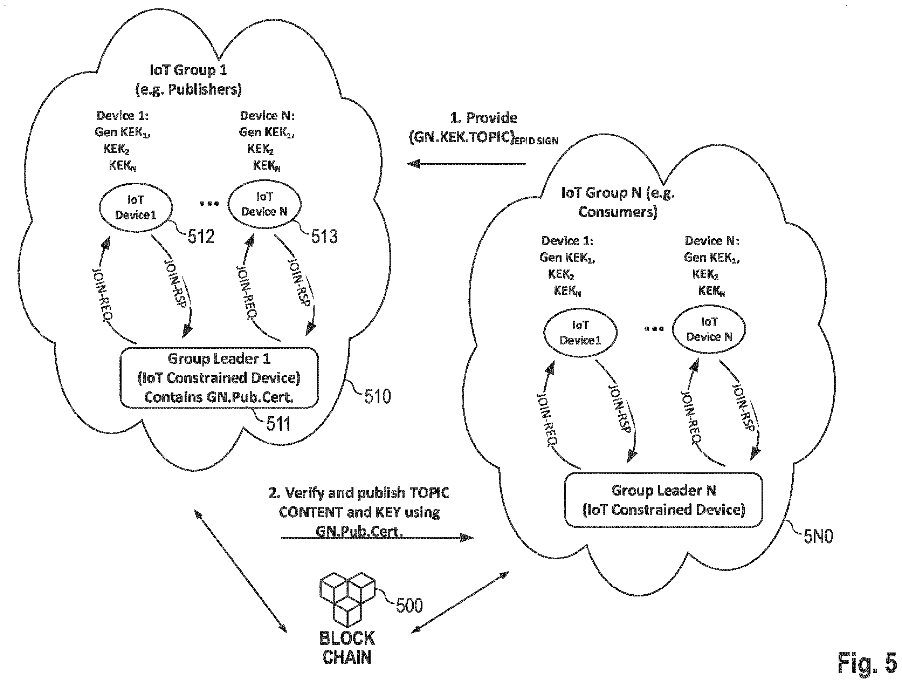

Another duty is managing a membership of nodes of the blockchain network in the group of nodes. For example, the processor circuitry may decide over admission of nodes into the group of nodes. For example, as shown in Fig. 5, the processor circuitry may provide a join request to potential group members and include a node as group member if the node responds with a join response. For example, membership in the group of nodes may be managed via a so-called Enhanced Privacy Identifier (EPID, an Intel^{®} technology), and the corresponding EPID join protocol.

The processor circuitry is to perform or delegate blockchain-related computational activity on behalf of the group of nodes according to the energy criterion. In general, the blockchain-related computational activity may relate to any activity related to participation in the blockchain network 105. For example, the blockchain-related computational activity may relate to at least one of creation of a zero-knowledge proof, verification of a zero-knowledge proof and proof of creation to be published on a blockchain. Zero-knowledge proof is a protocol that allows one person, the prover, to convince another person, the verifier, that they know a particular piece of information without revealing any additional information about it. In other words, the prover can prove knowledge of something without revealing anything else about it, including its contents. This is achieved through a series of interactions between the prover and the verifier where the prover demonstrates knowledge of something without giving any clues to its actual contents. Creation of a zero-knowledge proof relates to the creation of a code, such as a decentralized application, that can be used to perform a zero-knowledge proof. Verification of a zero-knowledge proof relates to the creation of a proof of verification, that indicates to others that a zero-knowledge proof has been verified by the entity providing the proof of verification. All of these tasks are computationally expensive, which makes sharing the computational load among the group of nodes desirable.

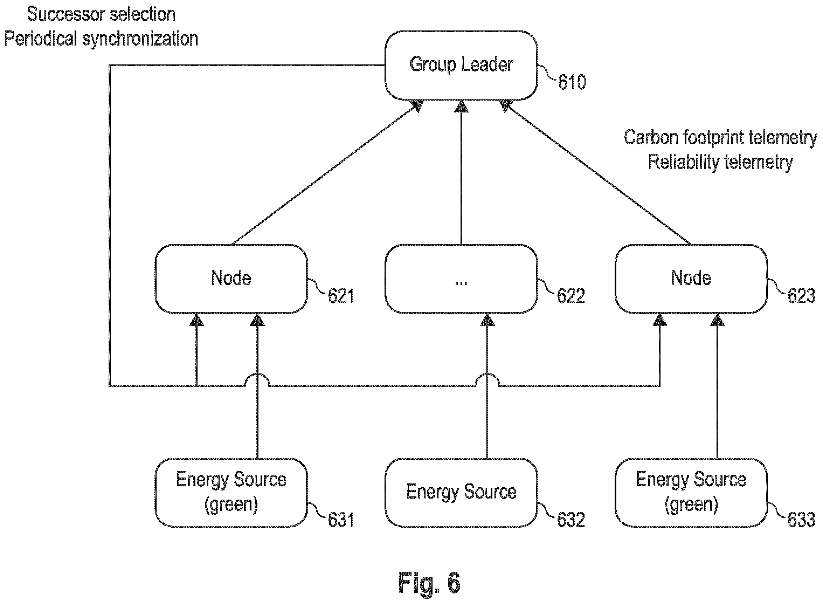

In the proposed concept, the computational activity is performed or delegated according to the energy criterion. For the group leader, three courses of action are possible - the group leader can perform all of the computational activity, the group leader can perform some of the computational activity and delegate the rest of the computational activity, or the group leader can delegate all of the computational activity. One of the criteria is the load of the group leader - the group leader can only do so much work, so some computational activity might have to be delegated in either case. The other criterion is the energy-related criterion. The energy-related criterion is a criterion that relates to the energy-use of the node performing the computational activity. For example, the energy criterion may be based on an amount of energy required by a node for performing blockchain-related computational activity. For example, ideally, the computational activity may be performed by the node that is most efficient and thus uses the least energy for performing the computational activity, e.g., through the use of a modern instruction set, efficient semiconductor process or use of a specialized accelerator card. Additionally, or alternatively, the amount of carbon dioxide emissions caused by the respective nodes for performing the computational activity may be taken into account. For example, the energy criterion may be based on a use of renewable energy (e.g., e.g., the emission or lack of emission of carbon dioxide) by a node of the group of nodes. The processor circuitry may obtain suitable information from the group members to evaluate the group members according to the energy criterion. For example, the processor circuitry may obtain, from the group members, information on at least one of an energy efficiency of the group member in performing blockchain-related computational activity, information on a use of renewable energy by the group member and information on a transient network reliability (which may be relevant for the purpose of finding a successor for group leadership) from the group members. For example, Fig. 6 shows the different nodes 621-623 reporting such information to the group leader 610.

In many cases, the use of renewable energy by a node varies over time, e.g., as the energy mix that applies in a geographic region fluctuates. For example, during daytime, the amount of solar energy may be higher than during nighttime. Similarly, at some times, wind energy may be plentiful, while, at other times, the lack of wind may impede availability of wind power. Therefore, the distribution of the computational activity may be adapted to the changing use of renewable energy. For example, the act of performing or delegating blockchain-related computational activity on behalf of the group of nodes may be performed based on a current or predicted use (in the future) of renewable energy by the respective node.

In some cases, the group leader performs all or some of the computational activity. To make this computational activity available to others (e.g., the nodes of the group, or nodes outside the group), the computational activity is documented on the blockchain, e.g., by publishing the newly created zero-knowledge proof, the proof of verification of the zero-knowledge proof or the proof of creation on the blockchain (e.g., on the blockchain of the blockchain network or a private Layer 2 blockchain that is private to the members of the group of nodes). For example, the act of performing the blockchain-related computational activity may comprise documenting 145 (shown in Fig. 1b) the blockchain-related computational activity on a block-chain accessible by the group of nodes. For this purpose, each group of nodes may have at least one key-encryption key that is used to write data to the blockchain, and that can be traced back to the group of nodes. A key encryption key (KEK) is a symmetric encryption key that is used to encrypt other keys, such as data encryption keys (DEKs) or communication encryption keys (CEKs). The idea behind using a KEK is to create an additional layer of security in the encryption process and to make it more difficult for unauthorized users to access sensitive information. For example, the processor circuitry may document the blockchain-related computational activity on a blockchain (e.g., the public blockchain or group-specific blockchain) using a key encryption key for documenting the blockchain-related computational activity. Accordingly, the method may comprise documenting 145 the blockchain-related computational activity on a blockchain using a key encryption key for documenting the blockchain-related computational activity.

As outlined above, there are two reasons for the group leader to delegate some or all of the work - the load of the group leader, and the energy-related criterion. For example, the processor circuitry may delegate blockchain-related computational activity to another member of the group of nodes based on a load of the group leader. Additionally, or alternatively, the processor circuitry may delegate blockchain-related computational activity to another member if the other group member surpasses the group leader according to the energy criterion, e.g., if the other group member uses less energy for the computational activity, or of the other group member uses a higher proportion of renewable energy (i.e., causes emission of a lower amount of carbon dioxide). The member the computational activity is delegated to is shown in Fig. 1a as group member (delegate) 100-D. The delegate may then also document the activity on a blockchain. For example, the group leader may share the KEK with the group member performing the computational activity, so the group member can write, in the name of the group, to the blockchain (e.g., the public or a group-specific blockchain). For example, the act of delegating the blockchain-related computational activity may comprise sharing the key encryption key for documenting the blockchain-related computational activity with the node of the group of nodes the verification is delegated to. Accordingly, as further shown in Fig. 1b, the act of delegating the blockchain-related computational activity may comprise sharing 155 the key encryption key for documenting the blockchain-related computational activity with the node of the group of nodes the verification is delegated to.

In some examples, the energy criterion is not only relevant for the purpose of assigning the computational activity. In addition, the energy criterion can also be used to determine one or more possible successors for the group leader. For example, the processor circuitry may nominate a successor for group leader among the members of the group of nodes according to the energy criterion. Accordingly, as further shown in Fig. 1b, the method may comprise nominating 160 a successor for group leader among the members of the group of nodes according to the energy criterion. For example, a group member of the group of nodes may be nominated based on the amount of energy required by a node for performing blockchain-related computational activity and/or based on a use of renewable energy (e.g., e.g., the emission or lack of emission of carbon dioxide) by the node. Another criterion for group leadership is the reliability of the different group members, and in particular the network reliability, to avoid making a node a group leader that is frequently unreachable. For example, the processor circuitry may nominate a successor for group leader among the members of the group of nodes further according to a transient network reliability criterion.

Managing the membership of the group members may include various tasks, such as admitting nodes as group members, but also removing group members. For example, the processor circuitry may manage membership of the nodes in the group of nodes, e.g., by admitting one or more nodes into the group of nodes, and/or by removing one or more nodes from the group of nodes. In particular, the group leader may remove nodes from the group of nodes according to the criterion. For example, the processor circuitry may remove a group member from the group of nodes according to a criterion. Accordingly, as further shown in Fig. 1b, the method may comprise removing a group member from the group of nodes according to the criterion. For example, the criterion may be one of the energy criterion (e.g., to remove nodes that are not energy-efficient enough), a transient network reliability criterion (e.g., to remove nodes that are not consistently available via the network) and a group participation reliability criterion (e.g., to remove nodes that have been shown not to be trustworthy).

At some point, the group leader may decide to abdicate group leadership, e.g., based on the group leader's load, or according to a schedule. For example, the processor circuitry may abdicate the node as group leader, and transfer group leadership to the successor. According to an example, the method may comprise abdicating 170 the node as group leader and transferring 175 group leadership to the successor.

While, in some cases, a group leader can abdicate according to its load or according to a schedule, in some cases, a group leader may be forced to abdicate. For example, the processor circuitry may abdicate the node as group leader according to an audit of activities of the group leader on at least one blockchain by one or more other members of the group. For example, the method may comprise abdicating 170 the node as group leader according to an audit of activities of the group leader on at least one blockchain by one or more other members of the group. For example, the activities of the group leader being audited may be previous computational activities being performed by the group leader, and/or adherence of the group leader to a schedule for abdicating as group leader.

In general, group membership may be managed via a direct anonymous attestation protocol, e.g., a direct anonymous attestation protocol that is based on a group public key and based on member-specific membership private keys. For example, Enhanced Privacy Identification, is an implementation of a direct attestation protocol developed by Intel^{®}. For example, group membership in the group of nodes is attested using enhanced privacy identification, EPID, and wherein group members join the group of nodes using the EPID join protocol and/or are removed from the group of nodes using EPID membership revocation. In a direct anonymous attestation protocol, group membership (of a node) in the group of nodes is attested based on a group public key and based on a member-specific membership private key (of the node). Instead of using a 1:1 relationship between a public key and a private key, the group public key is linked with a plurality of membership private keys held by the group members. The group public key can be used to verify the membership private keys, by verifying signatures generated using the membership private keys using the group public keys. To remove a member from the group, a revocation list is being used, with the signatures being verified further being checked using the revocation list. For example, the processor circuitry may generate a new membership private key (or obtain an unused membership private key from a storage) when admitting a new member node to the group, and put a group members membership private key on the revocation list if the group member is removed from the group of nodes.

In some cases, it may be desired to limit some transactions to a sub-group of members, according to a policy. For example, some transactions might only be performed by group members that use green energy, by group members that are energy-efficient according to the energy criterion, or by group members that are selected according to another criterion, such as transient network reliability or trustworthiness. For example, at least one of the group leader and one or more group members may be excluded from one or more pre-defined transactions (i.e., types of transactions) based on a policy. For example, the policy may be based on the energy criterion or on another criterion.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processor circuitry 14 or means for processing 14 may be implemented using one or more processing units, one or more processing devices, any means for processing, such as a processor, a computer or a programmable hardware component being operable with accordingly adapted software. In other words, the described function of the processor circuitry 14 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 16 or means for storing information 16 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

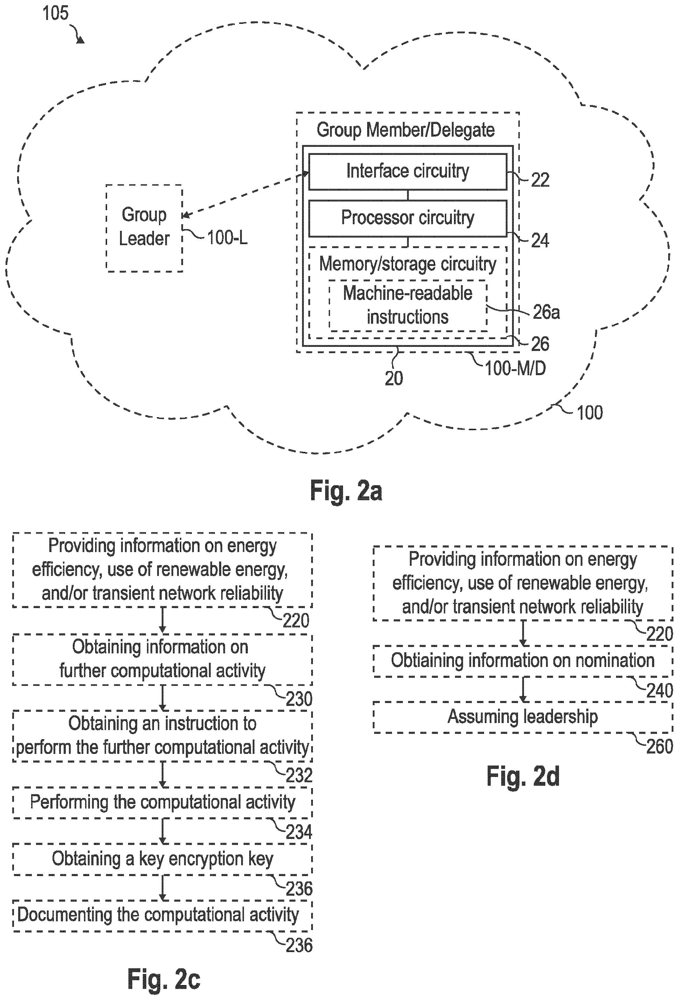

More details and aspects of the apparatus 10, the device 10, the group leader 100-L, the group of nodes 100, the method, and the corresponding computer program are mentioned in connection with the proposed concept, or one or more examples described above or below (e.g., Fig. 2a to 6). The apparatus 10, the device 10, the group leader 100-L, the group of nodes 100, the method, and the corresponding computer program may comprise one or more additional optional features corresponding to one or more aspects of the proposed concept, or one or more examples described above or below.

Fig. 2a shows a schematic diagram of an example of an apparatus 20 or device 20 of a group member 100-M, 100-D of a group of nodes 100 (e.g., the group of nodes 100 discussed in connection with Figs. 1a and/or 1b) of the blockchain network 105 (i.e., network of nodes participating in/using the same blockchain), and of a computer system 100-M/100-D (the computer system 100-D/100-L implementing the group member/group delegate) comprising such an apparatus 20 or device 20. Fig. 2a further shows a system, e.g., the group of nodes 100, comprising a group leader 100-L and the group member 100-D, 100-L.

The apparatus 20 comprises circuitry to provide the functionality of the apparatus 20. For example, the circuitry of the apparatus 20 may be configured to provide the functionality of the apparatus 20. For example, the apparatus 20 of Fig. 2a comprises interface circuitry 22, processor circuitry 24, and/or (optional) memory/storage circuitry 26. For example, the processor circuitry 24 may be coupled with the interface circuitry 22 and/or with the memory/storage circuitry 26. For example, the processor circuitry 24 may provide the functionality of the apparatus, in conjunction with the interface circuitry 22 (for communicating with other group members of the group of nodes 100, such as the group leader 100-L), and the memory/storage circuitry 26 (for storing information, such as machine-readable instructions). Likewise, the device 20 may comprise means for providing the functionality of the device 20. For example, the means may be configured to provide the functionality of the device 20. The components of the device 20 are defined as component means, which may correspond to, or implemented by, the respective structural components of the apparatus 20. For example, the device 20 of Fig. 2b comprises means for processing 24, which may correspond to or be implemented by the processor circuitry 24, means for communicating 22, which may correspond to or be implemented by the interface circuitry 22, (optional) means for storing information 26, which may correspond to or be implemented by the memory or storage circuitry 26. In general, the functionality of the processor circuitry 24 or means for processing 24 may be implemented by the processor circuitry 24 or means for processing 24 executing machine-readable instructions. Accordingly, any feature ascribed to the processor circuitry 24 or means for processing 24 may be defined by one or more instructions of a plurality of machine-readable instructions. The apparatus 20 or device 20 may comprise the machine-readable instructions 26a, e.g., within the memory or storage circuitry 26 or means for storing information 26.

The processor circuitry 24 or means for processing 24 is to obtain information on a blockchain-related computational activity being performed or delegated by a group leader of the group of nodes. The processor circuitry 24 or means for processing 24 is to obtain information on documentation of the blockchain-related computational activity by a group leader 100-L or delegate 100-D of the group of nodes. The processor circuitry 24 or means for processing 24 is to trust the blockchain-related computational activity based on the documentation.

Figs. 2b to 2d show flow charts of examples of aspects of a corresponding method for the group member of a group of nodes. The method comprises obtaining 210 information on a blockchain-related computational activity being performed or delegated by a group leader of the group of nodes. The method comprises obtaining 212 information on documentation of the blockchain-related computational activity by a group leader 100-L or delegate 100-D of the group of nodes. The method comprises trusting 214 the blockchain-related computational activity based on the documentation.

In the following, further details with respect to the apparatus 20, the device 20, the group member 100-M (or group delegate 100-D), the group of nodes 100, the method, and a corresponding computer program will be introduced with reference to the apparatus 20, the group-leader member 100-M and the group of nodes. Features introduced with reference to the apparatus 20, group leader 100-M and group of nodes 100 may likewise be included in the corresponding device 20, method and computer program.

While Figs. 1a to 1b relate to the group leader of the group of nodes, Figs. 2a to 2b relate to the individual group member (i.e., the group members not being the group leader). These group members benefit from the computational activity being performed or delegated by the group leader. In particular, they, by default, trust the computational activity being performed by the group leader or delegate. In other words, when the processor circuitry obtains information on a blockchain-related computational activity being performed or delegated by a group leader of the group of nodes and information on documentation of the blockchain-related computational activity by a group leader 100-L or delegate 100-D of the group of nodes (e.g., documentation stored on the public blockchain or a groups-specific blockchain), the processor circuitry, by default, trusts the blockchain-related computational activity based on the documentation.

In some cases, the group leader may request the group member to perform a blockchain-related computational task. For example, the processor circuitry may obtain information on further blockchain-related computational activity to be performed (e.g., by gaining the information on further blockchain-related computational activity to be performed from the (public or group-specific) blockchain, or by receiving the information from the group leader. Accordingly, as shown in Fig. 2c, the method may comprise obtaining 230 the information on further block-chain-related computational activity to be performed. In addition to the information on the further blockchain-related computational activity, the group member may further obtain a request or instruction for performing the computational activity. In other words, the processor circuitry may obtain an instruction to perform the further blockchain-related computational activity from the group leader and perform the further blockchain-related computational activity according to the instruction. Accordingly, as further shown in Fig. 2b, the method may comprise obtaining 232 the instruction to perform the further blockchain-related computational activity from the group leader and performing 234 the further blockchain-related computational activity according to the instruction. By following the instruction and thus performing the blockchain-related computational activity, the group member becomes a delegate (100-D) for that specific blockchain-related activity.

After having performed the computational activity, the group member may then document the computational activity, e.g., on the public or group-specific blockchain. As shown in connection with Figs. 1a and 1b, this may be done with the help of a group-specific key encryption key. For example, the processor circuitry may obtain a key encryption key for documenting blockchain-related computational activity from the group leader and document the blockchain-related computational activity on a blockchain using the key encryption key for documenting the blockchain-related computational activity. Accordingly, as further shown in Fig. 2c, the method may comprise obtaining 236 a key encryption key for documenting blockchain-related computational activity from the group leader and documenting 238 the blockchain-related computational activity on a blockchain using the key encryption key for documenting the blockchain-related computational activity.

As outlined in connection with Figs. 1a to 1b, the computational activity is delegated based on an energy criterion, to have a node perform the computational activity that is more energy-efficient or causes less carbon dioxide emissions than other group members. For this purpose (and for the purpose of nominating a successor for the group leader), the group member may provide the group leader with information that is relevant with respect to the energy-related criterion (and, with respect to being considered as successor, with respect to a reliability of the group member). For example, the processor circuitry may provide information on at least one of an energy efficiency of the group member in performing blockchain-related computational activity, information on a use of renewable energy by the group member and information on a transient network reliability of the group member to the group leader. Accordingly, as shown in Figs. 2c and 2d, the method may comprise providing 220 the information on at least one of the energy efficiency of the group member in performing blockchain-related computational activity, the information on the use of renewable energy by the group member and the information on the transient network reliability of the group member to the group leader. For example, the processor circuitry may obtain the information on at least one of the energy efficiency of the group member from a storage (e.g., the memory or storage circuitry 26) of the group member (if the information on at least one of the energy efficiency of the group member is static) or determine the information on at least one of the energy efficiency of the group member using a benchmark application. For example, the processor circuitry may determine the information on the use of renewable energy by the group based on a (periodically or sporadically updated) data source representing a (current and/or future) composition of the energy provided by an energy provider of the group member. For example, the processor circuitry may determine the information on the transient network reliability of the group member by monitoring the transient network reliability of the group member, e.g., using periodic messages, requests or pings to other group members or web servers. For example, the instruction to perform the further blockchain-related computational activity may be obtained in response to the provided information.

Similarly, the group member may be nominated as group leader in response to the provided information. In other words, the processor circuitry may obtain information on the group node being nominated as successor of the group leader (based on the energy criterion, and/or based on the transient network reliability). Accordingly, as shown in Fig. 2d, the method comprise obtaining 240 information on the group member being nominated as successor of the group leader. Once the current group leader abdicates (or is unreachable), the group member may take over as group leader. In other words, the processor circuitry may assume, by the member of the group, leadership of the group of nodes. Accordingly, as further shown in Fig. 2d, the method may comprise assuming 260, by the member of the group, leadership of the group of nodes. For example, the processor circuitry may assume, by the member of the group, leadership of the group of nodes according to the energy criterion and/or according to the transient network reliability of the group member (e.g., compared to other members).

One reason for a group leader to abdicate as group leader is when the other group members do not trust the group leader anymore. For example, if the group leader is caught performing computational activity in an erroneous or malicious manner, the group members can decide to confront the group leader. For example, a random group member may be selected to occasionally (e.g., according to a random (and spurious) schedule) audit a subset of the computational activity of the group leader, and to share information on the audit with other members of the group. In other words, the processor circuitry may audit activities of the group leader on at least one blockchain and share information on the audit with other members of the group of nodes. Accordingly, as further shown in Fig. 2b, the method may comprise auditing 250 activities of the group leader on at least one blockchain and sharing information on the audit with other members of the group of nodes. For example, if the information on the audit indicates, that the group leader has performed prior computational activity in an erroneous or malicious manner, the group leader may be forced to abdicate.

The interface circuitry 22 or means for communicating 22 may correspond to one or more inputs and/or outputs for receiving and/or transmitting information, which may be in digital (bit) values according to a specified code, within a module, between modules or between modules of different entities. For example, the interface circuitry 22 or means for communicating 22 may comprise circuitry configured to receive and/or transmit information.

For example, the processor circuitry 24 or means for processing 24 may be implemented using one or more processing units, one or more processing devices, any means for processing, such as a processor, a computer or a programmable hardware component being operable with accordingly adapted software. In other words, the described function of the processor circuitry 24 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 26 or means for storing information 26 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the apparatus 20, the device 20, the group member 100-M (or group delegate 100-D), the group of nodes 100, the method, and the corresponding computer program are mentioned in connection with the proposed concept, or one or more examples described above or below (e.g., Fig. 1a to 1b, 3 to 6). The apparatus 20, the device 20, the group member 100-M (or group delegate 100-D), the group of nodes 100, the method, and a corresponding computer program may comprise one or more additional optional features corresponding to one or more aspects of the proposed concept, or one or more examples described above or below.

Various examples of the present disclosure relate to a method and apparatus for Energy Aware Zero-knowledge of Proof (EAZKP) for Web3. The present disclosure relates generally to Web3.0 Decentralized App (dApps), Zero-knowledge proofs (ZKP), ZKP Proof of Creation & Verification, Proof of Creation as service, Blockchain, Software Security, Monetization and/or Software-as-a-Service.

The disruption, by the Web3.0, of centralized infrastructures provides great opportunities in terms of significant acceleration of client & IoT (Internet of Things) devices, so the data generation, processing, and management can be moved from a centralized cloud to edge/IoT devices. Web3 zero proof of knowledge as well as proof of work involved in transactions on blockchains is considered very expensive in terms of compute, power, energy, which does not help earlier adoption of Web3 due to sustainability goals across the globe. The proposed concept of Energy & Power Aware ZKP platforms may provide a step towards sustainable and scalable Web3.0 adoption, e.g., to address the aforementioned challenges.

In the proposed concept, nodes are grouped into groups, such as the group of nodes 100 discussed in connection with Figs. 1a to 2b. Group formation may be performed using the EPID (Enhanced Privacy Identifier, an Intel^{®} technology) join protocol for off-block-chain Proof of Creation (PoC) and Verification. The proposed concept allows a system of constrained devices to form a group where the group identity and credentials for interacting with external entities including other EPID groups may be shared among the various group members but where group member actions are not visible externally through use of any of the group credentials including EPID and KEK (key encryption keys) keys.

Policy based leader selection may be done, for example, based on the node with the highest residual energy or with most the efficient crypto acceleration for Web3 blockchain proof of creation (i.e., according to an energy criterion). Depending on the policy configuration, leader nodes can be rotated. In another example, leader selection may be based on the capability of the volume of transactions a node can contribute to or based on the pace at which ZKP can be generated. The group leader may be trusted by all group members to manage addition and removal of group members (i.e., group management). The group leader is also a group member. Group leader can be periodically audited by a randomly selected member to force rotation based on findings.

In cases with edge or other deployments with green power (solar, wind, etc.), a green power source bias factor can be incorporated while selecting the policy leader as described earlier. Given that such green power typically varies with time of day, etc. - predictive means to estimate the bias factor can also be incorporated.

Decentralized Web3 Apps on individual client/IoT devices can use the KEK keys provisioned by the group leader to perform full ZKP Creation or perform ZKP Creation (as examples of blockchain-related computational activity) once every N (configurable) transaction based on provisioned policies based on individual power/energy levels.

In various examples, the group leader is the single point of contact to external off-chain or block chain bridge for "batched" PoC (Proof of Creation) to be published, verified, and tracked in block chain transactions.

Power-aware zero proof of knowledge and proof of work may be done in a hierarchical manner, wherein pre-authorized participants can all perform EPID type group and approve Tx (transmissions) with a confidence-based heuristic reputation score from the group.

Platform TEE (Trusted Execution Environment) may be used to have a hybrid wallet for EPID Groups as well as hetero block chain direct connection for seamless operation. Hetero block chain scalability via layer 2 interoperability across the different domains and sub-nets may be provided for both centralized and distributed approach.

The group leader may establish a list of trusted successors that may act as transient or permanent leaders in case of transient or permanent failure. The overall group may work together to identify potential attacks if there is an infrequent rotation of group leaders. The successors may need to keep some consistent state with the current lead. The selection of the successor can be based on carbon-aware (i.e., energy aware) criteria to reduce the impact in terms of carbon emission.

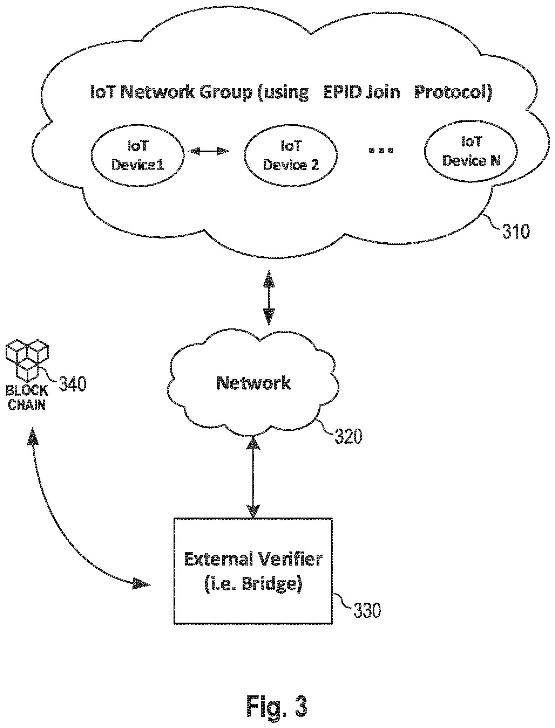

Fig. 3 shows a schematic diagram of a high-level use case supported by the proposed system architecture involving Web 3.0 DApp across pre-authorized participants within a EPID group with Web 3.0 block chain support. Fig. 3 shows an IoT network group 310 (which is grouped using the EPID Join Protocol) with IoT Devices 1...N as nodes. The group of nodes 310 communicates, via a network 320, with an external verifier (i.e., a bridge) 340, and, via the bridge, with a blockchain 340. In Fig. 3, the EPID group 310 is an off-block-chain group.

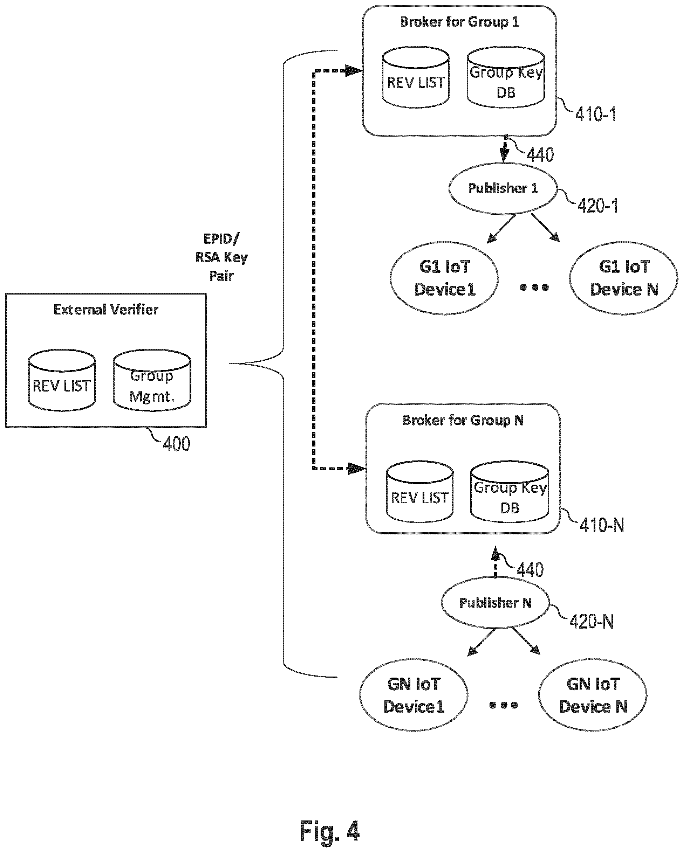

Fig. 4 shows a schematic diagram of energy-aware leader-based proof-of-creation publication. In Fig. 4, dashed lines (such as dashed lines 440) show information that is published across groups. Fig. 4 shows groups 1 to N. Each group includes a broker 410-1, 410-N (with a revision list and a group key database), a publisher 420-1, 420-N, and IoT devices being supplied by the respective publisher. Towards an external identifier (comprising a revision list and a group management database), the members of the groups use the same EPID/RSA key pair.

Fig. 5 shows a schematic diagram of an example of Layer 2 enhancements for off-chain Proof-of-Creation publishing as batched transactions across one or many EPID groups and heterogeneous blockchains. Fig. 5 shows two groups 1, N (510, 5N0) of IoT devices. In Fig. 5, group 1 510 are publishers, while group N 5N0 are consumers. The IoT groups each include a group leader 511 (which is an IoT constrained device) and group members 512, 513 (also IoT devices). In Fig. 5, the group leader invites the group members to join the groups (via join requests), which are answered by the group members using join responses. Each device includes key encryption keys 1... N. In Fig. 5, the group leader 511 of group 510 has a publication certificate (GN.Pub.Cert) for publishing to group N. If IoT group N requests group 1 to provide content according to a topic (using key {GN.KEK.TOPIC}_{EPID SIGN}), IoT group N verifies and publishes, via blockchain 500, content according to the topic and key using GN.Pub.Cert. The proposed concept may leverage energy-aware low-cost off-blockchain offline transactions for efficiency and support for heterogeneous block chain schemes.

Fig. 6 shows a schematic diagram of a failover mechanism for group leadership using carbon-aware principles, providing carbon-aware scalable reliability support. Fig. 6 shows a group leader 610 and group member nodes 621-623 which obtain their respective energy from different energy sources 631-633. Group member 621 obtains its energy from energy source 631, which is a green energy source, group member 622 obtains its energy from energy source 632, which is not known/not green, and group member 623 obtains its energy from energy source 633, which is a green energy source. The different candidates to be leader successors (i.e., the group members 621-623) provide telemetry that may indicate how efficient they are being in terms of carbon-aware impact and reliability. Telemetry could include one or more of an amount of green energy, an energy efficiency, and an amount of network transient failures. The leader 610 may determine (e.g., select) over time what the best candidates to success the leader are in case of failure. The leader may perform some level of synchronization over time with the successor(s). In Fig. 6, this is done with group members 621, 623, which use green energy sources. The synchronization may be useful in case there is some state that is to be propagated to a new leader. In case of long transient or permanent failure of the current leader, the next in command may take ownership (i.e., leaderships) and the rest of the peers of the node maybe notified. In case that the previous leader becomes available again, it may be notified by the rest of the peers that the previous leader is not a leader anymore.

Various examples of the present disclosure may have an impact on power utilization, e.g., overall and/or of the individual nodes.

In the following, some examples of the proposed concept are presented:
An example (e.g., example 1) relates to an apparatus (10) for a group leader (100-L) of a group of nodes (100) of a blockchain network (105), the apparatus comprising interface circuitry (12), machine-readable instructions (16a), and processor circuitry (14) to execute the machine-readable instructions to manage a membership of nodes of the blockchain network in the group of nodes, and to perform or delegate blockchain-related computational activity on behalf of the group of nodes according to an energy criterion.

Another example (e.g., example 2) relates to a previously described example (e.g., example 1) or to any of the examples described herein, further comprising that the processor circuitry is to execute the machine-readable instructions to assume, by the node, leadership of the group of nodes according to the energy criterion.

Another example (e.g., example 3) relates to a previously described example (e.g., one of the examples 1 to 2) or to any of the examples described herein, further comprising that the energy criterion is based on at least one of an amount of energy required by a node for performing blockchain-related computational activity and a use of renewable energy by a node of the group of nodes.

Another example (e.g., example 4) relates to a previously described example (e.g., example 3) or to any of the examples described herein, further comprising that the use of renewable energy by a node varies over time, with the act of performing or delegating blockchain-related computational activity on behalf of the group of nodes is performed based on a current or predicted use of renewable energy by the respective node.

Another example (e.g., example 5) relates to a previously described example (e.g., one of the examples 1 to 4) or to any of the examples described herein, further comprising that the block-chain-related computational activity relates to at least one of creation of a zero-knowledge proof, verification of a zero-knowledge proof and proof of creation to be published on a block-chain.

Another example (e.g., example 6) relates to a previously described example (e.g., one of the examples 1 to 5) or to any of the examples described herein, further comprising that the processor circuitry is to execute the machine-readable instructions to delegate blockchain-related computational activity to another member of the group of nodes based on a load of the group leader.

Another example (e.g., example 7) relates to a previously described example (e.g., one of the examples 1 to 6) or to any of the examples described herein, further comprising that the processor circuitry is to execute the machine-readable instructions to delegate blockchain-related computational activity to another member if the other group member surpasses the group leader according to the energy criterion.

Another example (e.g., example 8) relates to a previously described example (e.g., one of the examples 1 to 7) or to any of the examples described herein, further comprising that the act of performing the blockchain-related computational activity comprises documenting the block-chain-related computational activity on a blockchain accessible by the group of nodes.

Another example (e.g., example 9) relates to a previously described example (e.g., example 8) or to any of the examples described herein, further comprising that the processor circuitry is to execute the machine-readable instructions to document the blockchain-related computational activity on a blockchain using a key encryption key for documenting the blockchain-related computational activity.

Another example (e.g., example 10) relates to a previously described example (e.g., one of the examples 1 to 9) or to any of the examples described herein, further comprising that the act of delegating the blockchain-related computational activity comprises sharing a key encryption key for documenting the blockchain-related computational activity with the node of the group of nodes the blockchain-related computational activity is delegated to.

Another example (e.g., example 11) relates to a previously described example (e.g., one of the examples 1 to 10) or to any of the examples described herein, further comprising that the processor circuitry is to execute the machine-readable instructions to nominate a successor for group leader among the members of the group of nodes according to the energy criterion.

Another example (e.g., example 12) relates to a previously described example (e.g., example 11) or to any of the examples described herein, further comprising that the processor circuitry is to execute the machine-readable instructions to abdicate the node as group leader, and to transfer group leadership to the successor.

Another example (e.g., example 13) relates to a previously described example (e.g., one of the examples 11 to 12) or to any of the examples described herein, further comprising that the processor circuitry is to execute the machine-readable instructions to nominate a successor for group leader among the members of the group of nodes further according to a transient network reliability criterion.

Another example (e.g., example 14) relates to a previously described example (e.g., one of the examples 1 to 13) or to any of the examples described herein, further comprising that the processor circuitry is to execute the machine-readable instructions to remove a group member from the group of nodes according to a criterion.

Another example (e.g., example 15) relates to a previously described example (e.g., example 14) or to any of the examples described herein, further comprising that the criterion is one of the energy criterion, a transient network reliability criterion and a group participation reliability criterion.

Another example (e.g., example 16) relates to a previously described example (e.g., one of the examples 1 to 15) or to any of the examples described herein, further comprising that the processor circuitry is to execute the machine-readable instructions to abdicate the node as group leader according to an audit of activities of the group leader on at least one blockchain by one or more other members of the group.

Another example (e.g., example 17) relates to a previously described example (e.g., one of the examples 1 to 16) or to any of the examples described herein, further comprising that the processor circuitry is to execute the machine-readable instructions to communicate with one or more further nodes outside the group of nodes on behalf of the group of nodes.

Another example (e.g., example 18) relates to a previously described example (e.g., one of the examples 1 to 17) or to any of the examples described herein, further comprising that group membership in the group of nodes is attested based on a group public key and based on a member-specific membership private key.

Another example (e.g., example 19) relates to a previously described example (e.g., example 18) or to any of the examples described herein, further comprising that group membership in the group of nodes is attested using enhanced privacy identification, EPID, and wherein group members join the group of nodes using the EPID join protocol and/or are removed from the group of nodes using EPID membership revocation.

Another example (e.g., example 20) relates to a previously described example (e.g., one of the examples 1 to 19) or to any of the examples described herein, further comprising that at least one of the group leader and one or more group members are excluded from one or more pre-defined transactions based on a policy.

Another example (e.g., example 21) relates to a previously described example (e.g., example 20) or to any of the examples described herein, further comprising that the policy is based on the energy criterion.

An example (e.g., example 22) relates to an apparatus (20) for a group member (100-X) of a group of nodes (100) of a blockchain network (105), the apparatus comprising interface circuitry (22), machine-readable instructions (26a), and processor circuitry (24) to execute the machine-readable instructions to obtain information on a blockchain-related computational activity being performed or delegated by a group leader of the group of nodes, to obtain information on documentation of the blockchain-related computational activity by a group leader (100-L) or delegate (100-D) of the group of nodes, and to trust the blockchain-related computational activity based on the documentation.

Another example (e.g., example 23) relates to a previously described example (e.g., example 22) or to any of the examples described herein, further comprising that the processor circuitry is to execute the machine-readable instructions to obtain information on further blockchain-related computational activity to be performed, obtain an instruction to perform the further blockchain-related computational activity from the group leader, and perform the further blockchain-related computational activity according to the instruction.

Another example (e.g., example 24) relates to a previously described example (e.g., example 23) or to any of the examples described herein, further comprising that the processor circuitry is to execute the machine-readable instructions to provide information on at least one of an energy efficiency of the group member in performing blockchain-related computational activity, information on a use of renewable energy by the group member and information on a transient network reliability of the group member to the group leader, and to obtain the instruction to perform the further blockchain-related computational activity in response to the provided information.

Another example (e.g., example 25) relates to a previously described example (e.g., one of the examples 23 to 24) or to any of the examples described herein, further comprising that the processor circuitry is to execute the machine-readable instructions to obtain a key encryption key for documenting blockchain-related computational activity from the group leader, and to document the blockchain-related computational activity on a blockchain using the key encryption key for documenting the blockchain-related computational activity.

Another example (e.g., example 26) relates to a previously described example (e.g., one of the examples 22 to 25) or to any of the examples described herein, further comprising that the processor circuitry is to execute the machine-readable instructions to obtain information on the group node being nominated as successor of the group leader, and to assume, by the member of the group, leadership of the group of nodes.

Another example (e.g., example 27) relates to a previously described example (e.g., example 26) or to any of the examples described herein, further comprising that the processor circuitry is to execute the machine-readable instructions to assume, by the member of the group, leadership of the group of nodes according to an energy criterion.

Another example (e.g., example 28) relates to a previously described example (e.g., one of the examples 22 to 27) or to any of the examples described herein, further comprising that the processor circuitry is to execute the machine-readable instructions to audit activities of the group leader on at least one blockchain, and to share information on the audit with other members of the group of nodes.

Another example (e.g., example 29) relates to a previously described example (e.g., one of the examples 22 to 28) or to any of the examples described herein, further comprising that group membership in the group of nodes is attested based on a group public key and based on a member-specific membership private key.

Another example (e.g., example 30) relates to a previously described example (e.g., example 29) or to any of the examples described herein, further comprising that group membership in the group of nodes is attested using enhanced privacy identification, EPID, and wherein group members join the group of nodes using the EPID join protocol and/or are removed from the group of nodes using EPID membership revocation.

Another example (e.g., example 31) relates to a previously described example (e.g., one of the examples 22 to 30) or to any of the examples described herein, further comprising that at least one of the group leader and one or more group members are excluded from one or more pre-defined transactions based on a policy.

Another example (e.g., example 32) relates to a previously described example (e.g., example 31) or to any of the examples described herein, further comprising that the policy is based on the energy criterion.

An example (e.g., example 33) relates to an apparatus (10) for a group leader (100-L) of a group of nodes (100) of a blockchain network (105), the apparatus comprising processor circuitry configured to manage a membership of nodes of the blockchain network in the group of nodes. The processor circuitry is configured to perform or delegate blockchain-related computational activity on behalf of the group of nodes according to an energy criterion.

An example (e.g., example 34) relates to an apparatus (20) for a group member (100-X) of a group of nodes (100) of a blockchain network (105), the apparatus comprising processor circuitry (24) configured to obtain information on a blockchain-related computational activity being performed or delegated by a group leader of the group of nodes. The processor circuitry is configured to obtain information on documentation of the blockchain-related computational activity by a group leader (100-L) or delegate (100-D) of the group of nodes. The processor circuitry is configured to trust the blockchain-related computational activity based on the documentation.

An example (e.g., example 35) relates to a device (10) for a group leader (100-L) of a group of nodes (100) of a blockchain network (105), the device comprising means for processing (14) for managing a membership of nodes of the blockchain network in the group of nodes. The device (10) comprises means for processing for performing or delegating blockchain-related computational activity on behalf of the group of nodes according to an energy criterion.

An example (e.g., example 36) relates to a device (20) for a group member (100-X) of a group of nodes (100) of a blockchain network (105), the device comprising means for processing (24) for obtaining information on a blockchain-related computational activity being performed or delegated by a group leader of the group of nodes. The means for processing is for obtaining information on documentation of the blockchain-related computational activity by a group leader (100-L) or delegate (100-D) of the group of nodes. The means for processing is for trusting the blockchain-related computational activity based on the documentation.

An example (e.g., example 37) relates to a method for a group leader (100-L) of a group of nodes (100) of a blockchain network (105), the method comprising managing (130) a membership of nodes of the blockchain network in the group of nodes. The method comprises performing (140) or delegating (150) blockchain-related computational activity on behalf of the group of nodes according to an energy criterion.

Another example (e.g., example 38) relates to a previously described example (e.g., example 37) or to any of the examples described herein, further comprising that the method comprises assuming (110), by the node, leadership of the group of nodes according to the energy criterion.

Another example (e.g., example 39) relates to a previously described example (e.g., one of the examples 37 to 38) or to any of the examples described herein, further comprising that the method comprises delegating (150) blockchain-related computational activity to another member of the group of nodes based on a load of the group leader.

Another example (e.g., example 40) relates to a previously described example (e.g., one of the examples 37 to 39) or to any of the examples described herein, further comprising that the method comprises delegating (150) blockchain-related computational activity to another member if the other group member surpasses the group leader according to the energy criterion.

Another example (e.g., example 41) relates to a previously described example (e.g., one of the examples 37 to 40) or to any of the examples described herein, further comprising that the act of performing the blockchain-related computational activity comprises documenting (145) the blockchain-related computational activity on a blockchain accessible by the group of nodes.

Another example (e.g., example 42) relates to a previously described example (e.g., example 41) or to any of the examples described herein, further comprising that the method comprises documenting (145) the blockchain-related computational activity on a blockchain using a key encryption key for documenting the blockchain-related computational activity.

Another example (e.g., example 43) relates to a previously described example (e.g., one of the examples 37 to 42) or to any of the examples described herein, further comprising that the act of delegating the blockchain-related computational activity comprises sharing (155) a key encryption key for documenting the blockchain-related computational activity with the node of the group of nodes the blockchain-related computational activity is delegated to.

Another example (e.g., example 44) relates to a previously described example (e.g., one of the examples 37 to 43) or to any of the examples described herein, further comprising that the method comprises nominating (160) a successor for group leader among the members of the group of nodes according to the energy criterion.

Another example (e.g., example 45) relates to a previously described example (e.g., example 44) or to any of the examples described herein, further comprising that the method comprises abdicating (170) the node as group leader and transferring (175) group leadership to the successor.

Another example (e.g., example 46) relates to a previously described example (e.g., one of the examples 44 to 45) or to any of the examples described herein, further comprising that the method comprises nominating (160) a successor for group leader among the members of the group of nodes further according to a transient network reliability criterion.

Another example (e.g., example 47) relates to a previously described example (e.g., one of the examples 37 to 46) or to any of the examples described herein, further comprising that the method comprises abdicating (170) the node as group leader according to an audit of activities of the group leader on at least one blockchain by one or more other members of the group.

Another example (e.g., example 48) relates to a previously described example (e.g., one of the examples 37 to 47) or to any of the examples described herein, further comprising that the method comprises removing (180) a group member from the group of nodes according to a criterion.

Another example (e.g., example 49) relates to a previously described example (e.g., example 48) or to any of the examples described herein, further comprising that the criterion is one of the energy criterion, a transient network reliability criterion and a group participation reliability criterion.

Another example (e.g., example 50) relates to a previously described example (e.g., one of the examples 37 to 49) or to any of the examples described herein, further comprising that the method comprises communicating (120) with one or more further nodes outside the group of nodes on behalf of the group of nodes.

An example (e.g., example 51) relates to a method for a group member (100-X) of a group of nodes (100) of a blockchain network (105), the method comprising obtaining (210) information on a blockchain-related computational activity being performed or delegated by a group leader of the group of nodes. The method comprises obtaining (212) information on documentation of the blockchain-related computational activity by a group leader (100-L) or delegate (100-D) of the group of nodes. The method comprises trusting (214) the blockchain-related computational activity based on the documentation.

Another example (e.g., example 52) relates to a previously described example (e.g., example 51) or to any of the examples described herein, further comprising that the method comprises obtaining (230) information on further blockchain-related computational activity to be performed, obtaining (232) an instruction to perform the further blockchain-related computational activity from the group leader, and performing (234) the further blockchain-related computational activity according to the instruction.

Another example (e.g., example 53) relates to a previously described example (e.g., example 52) or to any of the examples described herein, further comprising that the method comprises providing (220) information on at least one of an energy efficiency of the group member in performing blockchain-related computational activity, information on a use of renewable energy by the group member and information on a transient network reliability of the group member to the group leader, and obtaining (232) the instruction to perform the further block-chain-related computational activity in response to the provided information.

Another example (e.g., example 54) relates to a previously described example (e.g., one of the examples 52 to 53) or to any of the examples described herein, further comprising that the method comprises obtaining (236) a key encryption key for documenting blockchain-related computational activity from the group leader, and documenting (238) the blockchain-related computational activity on a blockchain using the key encryption key for documenting the blockchain-related computational activity.

Another example (e.g., example 55) relates to a previously described example (e.g., one of the examples 51 to 54) or to any of the examples described herein, further comprising that the method comprises obtaining (240) information on the group member being nominated as successor of the group leader, and assuming (260), by the member of the group, leadership of the group of nodes.

Another example (e.g., example 56) relates to a previously described example (e.g., example 55) or to any of the examples described herein, further comprising that the method comprises assuming (260), by the member of the group, leadership of the group of nodes according to an energy criterion.

Another example (e.g., example 57) relates to a previously described example (e.g., one of the examples 51 to 56) or to any of the examples described herein, further comprising that the method comprises auditing (250) activities of the group leader on at least one blockchain and sharing information on the audit with other members of the group of nodes.

An example (e.g., example 58) relates to a computer system (100) comprising the apparatus (10) or device (10) according to one of the examples 1 to 21, 33 or 35 (or according to any other example), wherein the computer system is the group leader of the group of nodes.

An example (e.g., example 59) relates to a computer system (100) being configured to perform the method of one of the examples 37 to 50 (or according to any other example), wherein the computer system is the group leader of the group of nodes.

An example (e.g., example 60) relates to a computer system (200) comprising the apparatus (20) or device (20) according to one of the examples 22 to 32, 34 or 36 (or according to any other example), wherein the computer system is the group member of the group of nodes.

An example (e.g., example 61) relates to a computer system (200) being configured to perform the method of one of the examples 51 to 57 (or according to any other example), wherein the computer system is the group leader of the group of nodes.

An example (e.g., example 62) relates to a system comprising the computer system (100) according to one of the examples 58 or 59 (or according to any other example) as group leader and one or more computer systems (200) according to one of the examples 60 or 61 (or according to any other example) as group members.

An example (e.g., example 63) relates to a non-transitory machine-readable storage medium including program code, when executed, to cause a machine to perform the method of one of the examples 37 to 50 (or according to any other example) or the method of one of the examples 51 to 57 (or according to any other example).

An example (e.g., example 64) relates to a computer program having a program code for performing the method of one of the examples 37 to 50 (or according to any other example) or the method of one of the examples 51 to 57 (or according to any other example) when the computer program is executed on a computer, a processor, or a programmable hardware component.

An example (e.g., example 65) relates to a machine-readable storage including machine readable instructions, when executed, to implement a method or realize an apparatus as claimed in any pending claim or shown in any example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus for a group leader of a group of nodes of a blockchain network, the apparatus comprising interface circuitry, machine-readable instructions, and processor circuitry to execute the machine-readable instructions to:
manage a membership of nodes of the blockchain network in the group of nodes;
perform or delegate blockchain-related computational activity on behalf of the group of nodes according to an energy criterion.

2. The apparatus according to claim 1, wherein the processor circuitry is to execute the machine-readable instructions to assume, by the node, leadership of the group of nodes according to the energy criterion.

3. The apparatus according to one of the previous claims, wherein the energy criterion is based on at least one of an amount of energy required by a node for performing block-chain-related computational activity and a use of renewable energy by a node of the group of nodes.

4. The apparatus according to claim 3, wherein the use of renewable energy by a node varies over time, with the act of performing or delegating blockchain-related computational activity on behalf of the group of nodes is performed based on a current or predicted use of renewable energy by the respective node.

5. The apparatus according to one of the previous claims, wherein the blockchain-related computational activity relates to at least one of creation of a zero-knowledge proof, verification of a zero-knowledge proof and proof of creation to be published on a blockchain.

6. The apparatus according to one of the previous claims, wherein the processor circuitry is to execute the machine-readable instructions to delegate blockchain-related computational activity to another member of the group of nodes based on a load of the group leader.

7. The apparatus according to one of the previous claims, wherein the processor circuitry is to execute the machine-readable instructions to delegate blockchain-related computational activity to another member if the other group member surpasses the group leader according to the energy criterion.

8. The apparatus according to one of the previous claims, wherein the act of performing the blockchain-related computational activity comprises documenting the blockchain-related computational activity on a blockchain accessible by the group of nodes.

9. The apparatus according to claim 8, wherein the processor circuitry is to execute the machine-readable instructions to document the blockchain-related computational activity on a blockchain using a key encryption key for documenting the blockchain-related computational activity.

10. The apparatus according to one of the previous claims, wherein the act of delegating the blockchain-related computational activity comprises sharing a key encryption key for documenting the blockchain-related computational activity with the node of the group of nodes the blockchain-related computational activity is delegated to.

11. The apparatus according to one of the previous claims, wherein the processor circuitry is to execute the machine-readable instructions to nominate a successor for group leader among the members of the group of nodes according to the energy criterion.

12. The apparatus according to one of the previous claims, wherein the processor circuitry is to execute the machine-readable instructions to remove a group member from the group of nodes according to a criterion.

13. An apparatus for a group member of a group of nodes of a blockchain network, the apparatus comprising interface circuitry, machine-readable instructions, and processor circuitry to execute the machine-readable instructions to:
obtain information on a blockchain-related computational activity being performed or delegated by a group leader of the group of nodes;
obtain information on documentation of the blockchain-related computational activity by a group leader or delegate of the group of nodes; and
trust the blockchain-related computational activity based on the documentation.

14. A method for a group leader of a group of nodes of a blockchain network, the method comprising:
managing a membership of nodes of the blockchain network in the group of nodes;
performing or delegating blockchain-related computational activity on behalf of the group of nodes according to an energy criterion.

15. A non-transitory machine-readable storage medium including program code, when executed, to cause a machine to perform the method of claim 14.
